# EUROPÄISCHE PATENTSCHRIFT

(11) **EP 2 919 962 B1**
(45) Veröffentlichungstag und Bekanntmachung des Hinweises auf die Patenterteilung: **26.12.2018**
(21) Anmeldenummer: 13770462.3
(22) Anmeldetag: 26.09.2013
(51) Int. Cl.: B29C 47/92, B29C 47/00, B29C 47/08, B29C 47/10

(54) **ÜBERWACHUNGSVERFAHREN UND VORRICHTUNG**
MONITORING METHOD AND APPARATUS
PROCÉDÉ DE SURVEILLANCE ET APPAREIL ASSOCIÉ

(30) Priorität: 13.11.2012 DE 102012110911
(43) Veröffentlichungstag der Anmeldung: 23.09.2015
(60) Teilanmeldung: 16156183.2
(73) Patentinhaber: Windmöller & Hölscher KG, 49525 Lengerich (DE)
(72) Erfinder: BACKMANN, Martin, 49525 Lengerich (DE); MIDDELBERG, Gerhard, 49525 Lengerich (DE); BUSSMANN, Markus, 45147 Essen (DE); MINNERUP, Jens, 46149 Oberhausen (DE)
(86) Internationale Anmeldenummer: PCT/EP2013/070061
(87) Internationale Veröffentlichungsnummer: WO 2014/075842

(56) Entgegenhaltungen:
- EP-A2- 1 680 717
- EP-B1- 0 265 601
- DE-A1- 3 304 865
- PETER FISCHER: "Neue Wege - fÃ 1/4 r die Automatisierung der Rohrextrusion", KUNSTSTOFFBERATER,, Bd. 30, Nr. 3, 1. März 1985 (1985-03-01), Seiten 27-31, XP001354048,
- KARL V H: "MESSEN, STEUERN UND REGELN AN BLASFOLIEN-EXTRUSIONSANLAGEN", KUNSTOFFE, CARL HANSER VERLAG, MUNCHEN, DE, Bd. 81, Nr. 10, 1. Oktober 1991 (1991-10-01), Seiten 902-906, XP000297626, ISSN: 0023-5563
- MENGES G ET AL: "ProzeÃ analyse an einem Kautschukextruder", KAUTSCHUK + GUMMI KUNSTSTOFFE,, Bd. 35, Nr. 9, 1. September 1982 (1982-09-01), Seiten 733-746, XP001353790,

## Beschreibung

Die vorliegende Erfindung betrifft ein Überwachungsverfahren für die Überwachung des Energiebedarfs einer Extrusionsanlage sowie eine Extrusionsanlage mit zumindest einem Extruder und wenigstens einer Kontrollvorrichtung zur Ausführung eines Überwachungsverfahrens.

Es ist bekannt, dass für die Herstellung von Kunststoffbauteilen, insbesondere von Kunststofffolien, Extrusionsanlagen verwendet werden. Solche Extrusionsanlagen weisen einen oder auch mehrere einzelne Extruder auf, welche mithilfe einer Extrusionsschnecke Granulat aufschmelzen und zu einer Extrusionsdüse führen können. Für den Betrieb jedes einzelnen Extruders und dementsprechend auch für den Betrieb der gesamten Extrusionsanlage ist Energie notwendig. Diese Energie wird durch unterschiedliche Medien der Extrusionsanlage zugeführt. Dies sind neben dem Stromanschluss an den elektrischen Strom die Zufuhr von Kühlluft, insbesondere als Druckluft (in Norm m³), und die Zufuhr von Kühlwasser. Selbstverständlich sind auch andere Energieströme möglich, um die Extrusionsanlage zu versorgen.

Nachteilhaft bei bekannten Extrusionsanlagen ist es, dass nur mit hohem Aufwand eine Rückmeldung hinsichtlich des aktuellen Energiebedarfs, insbesondere mit Bezug auf die eingesetzte Rezeptur in der Extrusionsanlage, erfolgen kann. Diese Rückmeldung wird z. B. durch separate Monitoring-Systeme zur Verfügung gestellt, welche über notwendigerweise zur Verfügung gestellte Schnittstellen mit der Extrusionsanlage gekoppelt werden müssen. Dementsprechend sind solche Monitoring-Systeme mit zusätzlichen Sensoren ausgestattet, welche in bekannter Weise über Schnittstellen die Energieeffizienz einer solchen Anlage überwachen können. Dies führt jedoch zu großem baulichen Aufwand, da solche Schnittstellen erst zur Verfügung gestellt werden müssen. Auch ist der Kostenaufwand für ein solches Monitoring-System relativ hoch, da insbesondere eine Vielzahl von zusätzlichen Sensoren notwendig ist, um den Energiebedarf zu überwachen.

Weiterhin ist eine Regelung bei Rohrextrusionen aus FISCHER, Peter: "Neue Wege für die Automatisierung der Rohrextrusion", Kunststoffberater, Bd. 30, Nr. 3, Seiten 27-31, bekannt. Ferner wird eine Regelung von Blasfolien-Extrusionsanlagen in KARL, V.-H.: "Messen, Steuern und Regeln an Blasfolien-Extrusionsanlagen", Kunststoffe, Bd. 81, Nr. 10, Seiten 902-906, und eine Prozessanalyse eines Kautschukextruders in MENGES, G. et al.: "Prozeßanalyse an einem Kautschukextruder", Kautschuk + Gummi Kunststoffe, Bd. 35, Nr. 9, Seiten 733-746, beschrieben. Darüber hinaus sind Extrusionsverfahren aus der DE 33 04 865 A1 und der EP 0 265 601 A2 bekannt.

Es ist Aufgabe der vorliegenden Erfindung, die voranstehend beschriebenen Nachteile zumindest teilweise zu beheben. Insbesondere ist es Aufgabe der vorliegenden Erfindung, ein Überwachungsverfahren sowie eine Extrusionsanlage zur Verfügung zu stellen, welche in kostengünstiger und einfacher Weise den Energiebedarf der Extrusionsanlage überwachen.

Voranstehende Aufgabe wird gelöst durch ein Überwachungsverfahren mit den Merkmalen des Anspruchs 1 und eine Extrusionsanlage mit den Merkmalen des Anspruchs 10. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Überwachungsverfahren beschrieben sind, selbstverständlich auch im Zusammenhang mit der erfindungsgemäßen Extrusionsanlage und jeweils umgekehrt, so dass bezüglich der Offenbarung zu den einzelnen Erfindungsaspekten stets wechselseitig Bezug genommen wird bzw. werden kann.

Bei einer Extrusionsanlage im Rahmen der vorliegenden Erfindung handelt es sich insbesondere um eine Kunststoff-Extrusionsanlage. Bevorzugt ist die erfindungsgemäße Extrusionsanlage als Kunststofffolien-Extrusionsanlage ausgebildet. Eine mögliche Ausführungsform der vorliegenden Erfindung stellt eine Blasfolien-Extrusionsanlage dar. Insbesondere die relativ hohen Temperaturen beim Aufschmelzen von thermoplastischen oder anderen Kunststoffen erzeugen einen hohen Energiebedarf. Gerade in einem solchen Fall treten die erläuterten Vorteile eines erfindungsgemäßen Verfahrens besonders deutlich zu tage. Zum Beispiel kann eine solche Kunststoff-Extrusionsanlage eine Düse für das Ausbringen des flüssigen Kunststoffes aufweisen. Auch eine der Düse nachgeordnete Kühleinrichtung ist denkbar.

Ein erfindungsgemäßes Überwachungsverfahren dient der Überwachung des Energiebedarfs einer Extrusionsanlage. Ein solches Überwachungsverfahren weist die folgenden Schritte auf:
- Setzen einer Bilanzierungsgrenze, in deren Bilanzraum sich die Extrusionsanlage befindet,
- Überwachen zumindest eines Energiestroms in den Bilanzraum hinein,
- Überwachen eines Zufuhrstroms an Granulat in die Extrusionsanlage,
- Bestimmen der Relation zwischen dem zumindest einen Energiestrom und dem Zufuhrstrom.

Ein erfindungsgemäßes Überwachungsverfahren bedient sich dabei insbesondere der Sensorik, welche bereits in der Extrusionsanlage vorhanden ist. So ist für die Regelung der Extrusionsanlage, insbesondere für die Regelung der einzelnen Extruder, eine Überwachung der Zufuhrmenge und dementsprechend eine Messung bzw. Bestimmung des Zufuhrstroms an Granulat notwendig. Dieser Parameter wird also bereits überwacht und kann ohne zusätzlichen Messaufwand einem erfindungsgemäßen Verfahren zugutekommen.

Darüber hinaus wird zumindest ein Energiestrom überwacht. Dies kann in direkter oder auch in indirekter Weise erfolgen. Energieströme im Sinne der vorliegenden Erfindung sind z. B. die Zufuhrströme an Kühlwasser und/oder Kühlluft, insbesondere in Form von Druckluft (in Norm m³). Auch der elektrische Stromanschluss ist ein entsprechender Energiestrom im Sinne der vorliegenden Erfindung. Eine direkte Messung erfolgt ferner vorzugsweise direkt in Kilowattstunden bzw. in Kilowatt, um als Eingangsgröße für das erfindungsgemäße Verfahren direkt die gewünschte Einheit zu haben. Selbstverständlich sind jedoch auch indirekte Messungen denkbar, so dass der Stromfluss, bzw. der Volumenstrom in Liter pro Stunde bzw. Normkubikmeter pro Stunde an Kühlluft und/oder Kühlwasser bestimmt wird. Rechnerisch kann aus dieser indirekten Messung ein Rückschluss auf den Energiegehalt des jeweiligen Energiestroms gezogen werden. Insbesondere wird hierfür noch die Temperatur des jeweiligen Energiestroms, also des Kühlwassers und/oder der Kühlluft eingesetzt. Auch für die Überwachung zumindest eines Energiestroms werden vorzugsweise bereits bestehende Messsensoren der Extrusionsanlage verwendet. Bei der Überwachung von elektrischem Strom als Energiestrom kann z. B. ein Stromzähler eingesetzt werden, welcher bereits in der Extrusionsanlage vorhanden ist. Durchflussmesser können für die Regelung der Kühlluft bzw. des Kühlwassers bereits in der Extrusionsanlage vorgesehen sein, und deren Messdaten für ein erfindungsgemäßes Verfahren als Überwachung des zumindest einen Energiestroms eingesetzt werden.

Durch die Ausführungsschritte eines erfindungsgemäßen Verfahrens wird es möglich, dass die Überwachung des Energiebedarfs der Extrusionsanlage im Wesentlichen ohne zusätzliche Messsensorik und insbesondere ohne zusätzliche Schnittstellen möglich wird. Eine bauliche Veränderung bestehender Extrusionsanlagen ist somit nicht bzw. nur im kleinen Maße notwendig. Im Vergleich zu bekannten Monitoring-Systemen kann dementsprechend in kostengünstiger und einfacher Weise der Energiebedarf der Extrusionsanlage überwacht werden.

Die Überwachung gemäß einem erfindungsgemäßen Überwachungsverfahren kann selbstverständlich weiteren Einsatzzwecken zugeführt werden. So können die Ergebnisse aus der Überwachung als Eingangsgrößen für nachfolgende Regelungen der Extrusionsanlage oder auch weiterer Vorrichtungen dienen. Diese Regelung ist z. B. die Regelung der Temperaturen innerhalb der Extrusionsanlage, die Regelung der Kühlung des ausgetretenen Produkts aus der Extrusionsanlage oder sogar die Regelung der Klimatisierung einer Halle, in welcher die Extrusionsanlage angeordnet ist.

Die voranstehend beschriebenen Möglichkeiten der Regelungen werden unter anderem erst möglich, durch die erfindungsgemäße Definition der Bilanzierungsgrenze. Im Vergleich zu bekannten aufwendigen Monitoring-Systemen kann auf diese Weise ein Bilanzraum erzeugt werden, welcher die Extrusionsanlage vollständig einschließt. Somit können auch Energieanteile betrachtet werden, welche von den bekannten Monitoring-Systemen nicht wahrgenommen werden. Dabei handelt es sich insbesondere um die Abwärme einer Extrusionsanlage, welche z. B. für die Regelung der Klimaanlage einer Halle, in welcher sich die Extrusionsanlage befindet, eingesetzt werden kann.

Eine Bestimmung der Relation zwischen dem zumindest einen Energiestrom und dem Zufuhrstrom kann auch als Erzeugen einer Kenngröße bzw. einer Referenzgröße verstanden werden. Damit wird der Energiestrom in Bezug gesetzt zum Zufuhrstrom, so dass eine Relation entsteht, die eine Aussage über den aktuellen Energieeffizienzstatus des Betriebs der Extrusionsanlage erlaubt. Darüber hinaus ist es möglich, diese Relation auch auf die jeweils verwendete Rezeptur zu spezifizieren. Die jeweilige Kenngröße erlaubt es, schnell und einfach eine Aussage über den aktuellen Energiestatus der Extrusionsanlage zu treffen. So kann anhand dieser Information manuell, halbautomatisch oder sogar vollautomatisch ein Eingriff in die Steuerung bzw. die Regelung der Extrusionsanlage erfolgen. Möglicherweise bestehende Abweichungen von Normwerten, wie dies später noch erläutert wird, können somit kostengünstig, schnell und einfach behoben bzw. minimiert werden.

Wird eine Mehrzahl von Energieströmen überwacht, so kann durch Addition der Gesamtenergieeintrag überwacht werden und in erfindungsgemäßer Weise eine Relation zwischen dieser Summe der überwachten Energieströme und dem Zufuhrstrom erzeugt werden. Neben der Einflussmöglichkeit des Ergebnisses eines erfindungsgemäßen Überwachungsverfahrens auf die Steuerung und/oder Regelung der Extrusionsanlage können selbstverständlich auch Anzeigevorrichtungen vorgesehen sein, welche z.B. in Tachoform bzw. in Form einer Ampelanlage die aktuelle Energiesituation der Extrusionsanlage darstellen.
Ein erfindungsgemäßes Überwachungsverfahren ist dahingehend weitergebildet, dass zumindest einer der folgenden Energieströme überwacht wird:
- Kühlwasser
- Kühlluft, insbesondere in Form von Druckluft (in Norm m³)
- Elektrischer Strom

Das Kühlwasser kann nochmals unterteilt werden in Kühlwasser, welches für den durchgeführten Extrusionsprozess verwendet wird, und in Kühlwasser, welches für die Maschinenkühlung eingesetzt ist. Sämtliche Werte können dabei sowohl direkt als auch indirekt bestimmt werden. Eine direkte Bestimmung bezieht sich auf eine direkte Messung der Energiewerte in Watt bzw. Kilowattstunden. Eine indirekte Messung kann z. B. über den Volumenstrom des jeweiligen Kühlmediums mit Bezug auf die zugeführte Temperatur die gewünschte Aussage der Überwachung erzeugen.
Ein weiterer Vorteil kann es sein, wenn bei einem erfindungsgemäßen Überwachungsverfahren wenigstens zwei Energieströme in den Bilanzraum hinein überwacht werden. Dabei wird für die Bestimmung der Relation zu dem Zufuhrstrom die Summe der überwachten Energieströme verwendet. Dies erlaubt eine noch breitere Überwachung der Energiesituation eines erfindungsgemäßen Überwachungsverfahrens. Insbesondere werden alle, vor allem alle wesentlichen Energieströme in den Bilanzraum hinein überwacht. Die Summenbildung aus allen überwachten Energieströmen erlaubt eine einfache und vor allem schnelle Durchführung eines erfindungsgemäßen Überwachungsverfahrens. Unabhängig von der Anzahl der überwachten Energieströme wird nur eine einzige Relation bestimmt, so dass ein einziger Kennwert als Ergebnis dieser Relation eine Kenngröße für den aktuellen Energiestatus der Extrusionsanlage darstellt. Die Summe kann dabei insbesondere von einer Kontrollvorrichtung automatisch oder halbautomatisch erzeugt werden. Diese Kontrollvorrichtung führt vorzugsweise auch halbautomatisch oder automatisch die Bestimmung der Relation durch.

Vorteilhaft ist es darüber hinaus, wenn bei einem erfindungsgemäßen Überwachungsverfahren zusätzlich die Überwachung zumindest eines Energiestroms eines Extruders der Extrusionsanlage erfolgt, für welchen die Relation zum Zufuhrstrom zu diesem Extruder bestimmt wird. Mit anderen Worten kann zusätzlich zu der Betrachtung der Energiesituation der gesamten Extrusionsanlage eine feinere Auflösung der Überwachung erfolgen. So kann nun auch die Energiesituation eines einzelnen Extruders mit einem erfindungsgemäßen Verfahren bestimmt werden. Dementsprechend wird eine kleinere Bilanzierungsgrenze für diesen Unterschritt des erfindungsgemäßen Verfahrens definiert. Diese kleinere Bilanzierungsgrenze schließt in ihrem Bilanzraum den jeweiligen Extruder ein. Durch diese Ausführungsform des Verfahrens kann eine feinere Auflösung der Überwachung erfolgen, so dass eine genauere Eingriffsmöglichkeit für die Steuerung bzw. Regelung der Extrusionsanlage möglich wird. Insbesondere können Rückschlüsse auf die Effizienz einzelner Extruder innerhalb der Extrusionsanlage vorgenommen werden.

Ebenfalls von Vorteil kann es sein, wenn bei einem erfindungsgemäßen Überwachungsverfahren zumindest zwei Energieströme überwacht werden, wobei für jeden Energiestrom einzeln die Relation zum Zufuhrstrom bestimmt wird. Die Energiesituation wird also auf den jeweiligen Energiestrom spezifiziert. Dies erhöht ebenfalls die Anzahl der Werte, die mit einem erfindungsgemäßen Überwachungsverfahren zur Verfügung gestellt werden. Damit kann eine Vielzahl von Werten als Eingangsgrößen für den Eingriff in eine Steuerung bzw. Regelung der Extrusionsanlage Verwendung finden. Dieser Eingriff kann nun detailgenauer erfolgen, so dass ein einfacheres und vor allem zielgenaues Gegensteuern gegen unerwünschte Energiesituationen der Extrusionsanlage möglich wird.

Ebenfalls von Vorteil ist es, wenn bei einem erfindungsgemäßen Überwachungsverfahren die Abwärme der Extrusionsanlage über die Bestimmung der Relation der durchgeführten mechanischen Arbeit in der Extrusionsanlage und des zumindest einen überwachten Energiestroms überwacht wird. Mit anderen Worten kann durch eine Auswertung, z. B. in einer Kontrollvorrichtung, ohne detaillierte Messung der Abwärme diese Abwärme bestimmt werden. Dementsprechend kann auf Messsensorik und zugehörige Einbauten in der Extrusionsanlage verzichtet werden. Die Abwärme dient dabei insbesondere durch diese Ausführungsform des erfindungsgemäßen Überwachungsverfahrens als zusätzlicher Grad für die Effizienz bei dem Betrieb der Extrusionsanlage. Auch kann die Information über die Abwärme für eine genauere und vor allem effizientere Regelung einer Klimaanlage für den Aufstellungsort der Extrusionsanlage und/oder für die Kühlvorrichtungen für das Extrusionsprodukt verwendet werden.

Ein erfindungsgemäßes Verfahren ist dahingehend weitergebildet, dass die bestimmte Relation zwischen dem zumindest einen Energiestrom und dem Zufuhrstrom mit Bezug auf die in der Extrusionsanlage verwendete Rezeptur in einer Datenbank gespeichert wird. Die Datenbank baut dementsprechend über den Betrieb der Extrusionsanlage mit einem erfindungsgemäßen Überwachungsverfahren Datensätze für die einzelnen Rezepturen auf. Für jede Rezeptur befinden sich also über die Zeitdauer des Einsatzes der Extrusionsanlage ein oder mehrere Kenngrößen aus der Bestimmung der erfindungsgemäßen Relation in der Datenbank. Diese Datenbank kann für die Auswertung der Energieeffizienz bezogen auf die einzelnen Rezepturen verwendet werden. Insbesondere kann ein Vergleich der aktuellen Situation mit den in der Datenbank gespeicherten Referenzwerten erfolgen, um die Energieeffizienz der Extrusionsanlage zu überwachen. Auch Veränderungen der Energieeffizienz, also ein Trend in eine Verbesserung oder Verschlechterung der Gesamteffizienz der Extrusionsanlage, können auf diese Weise über lange Zeitdauern des Betriebs der Extrusionsanlage erkannt werden. So kann eine bedarfsgerechte Wartung der Extrusionsanlage erfolgen, um unnötige frühe Wartungsschritte zu vermeiden. Gleichzeitig wird eine rechtzeitige Wartung sichergestellt, um unnötig schlechte Energieeffizienzbetriebsweisen der Extrusionsanlage zu vermeiden. Diese Datenbank kann also zur direkten aber auch zur langfristigen Steuerung bzw. Regelung der Extrusionsanlage verstanden werden. Als Rezeptur ist im Sinne der vorliegenden Erfindung der Mix aus Materialien zu verstehen, welcher als Zufuhrstrom der Extrusionsanlage zugeführt wird.

Ein erfindungsgemäßes Überwachungsverfahren, insbesondere gemäß dem voranstehenden Absatz, ist dahingehend weitergebildet, dass ein Vergleich der bestimmten Relation zwischen dem zumindest einen Energiestrom und dem Zufuhrstrom und einer für die Extrusionsanlage aktuell verwendeten Rezeptur gespeicherte Relation durchgeführt wird.

Durch diesen Vergleich kann eine Trenderfassung möglich werden. Je nachdem wie weit eine Abweichung von dem Sollwert erfolgt, kann der Istwert durch einen Eingriff in die Steuerung bzw. Regelung der Extrusionsanlage wieder zurückgeführt werden. Dies kann durch manuelles, halbautomatisches oder sogar automatisches Nachregeln der Extrusionsanlage bzw. deren Betriebsparametern erfolgen. In starken Abweichungsfällen kann dies sogar zum Stopp der Extrusionsanlage führen. Insbesondere erfolgt auf diese Weise eine Optimierung des Betriebs bzw. der Betriebsweise der Extrusionsanlage.

Vorteilhaft ist es weiter, wenn bei einem erfindungsgemäßen Überwachungsverfahren gemäß einem der beiden voranstehenden Absätze eine Vielzahl von bestimmten Relationen zwischen dem zumindest einen Energiestrom und dem Zufuhrstrom in der Datenbank gespeichert werden. Für jede Rezeptur werden dementsprechend vorzugsweise zwei oder mehr verschiedene Kenngrößen gespeichert. Man kann dies auch als sogenanntes selbstlernendes System bezeichnen. Aus der Mehrzahl der gespeicherten Kenngrößen für jede Rezeptur kann ein Mittelwert gebildet werden. Auch können auf diese Weise Standardabweichungen definiert werden, die als Toleranzschwellenwerte eingesetzt werden können. Auch kann auf diese Weise ein langfristiger Trend erkannt werden, um die bereits beschriebene Wartungssituation bedarfsspezifisch erfüllen zu können.

Ebenfalls Gegenstand der vorliegenden Erfindung ist eine Extrusionsanlage, aufweisend zumindest einen Extruder und wenigstens eine Kontrollvorrichtung. Eine erfindungsgemäße Extrusionsanlage zeichnet sich dadurch aus, dass die Kontrollvorrichtung für die Ausführung eines erfindungsgemäßen Überwachungsverfahrens ausgebildet ist. Dementsprechend bringt eine erfindungsgemäße Extrusionsanlage die gleichen Vorteile mit sich, wie sie ausführlich mit Bezug auf ein erfindungsgemäßes Überwachungsverfahren erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Extrusionsanlage zur Durchführung eines erfindungsgemäßen Verfahrens und
- Fig. 2: eine Ausführungsform einer erfindungsgemäßen Extrusionsanlage mit drei Extrudern.

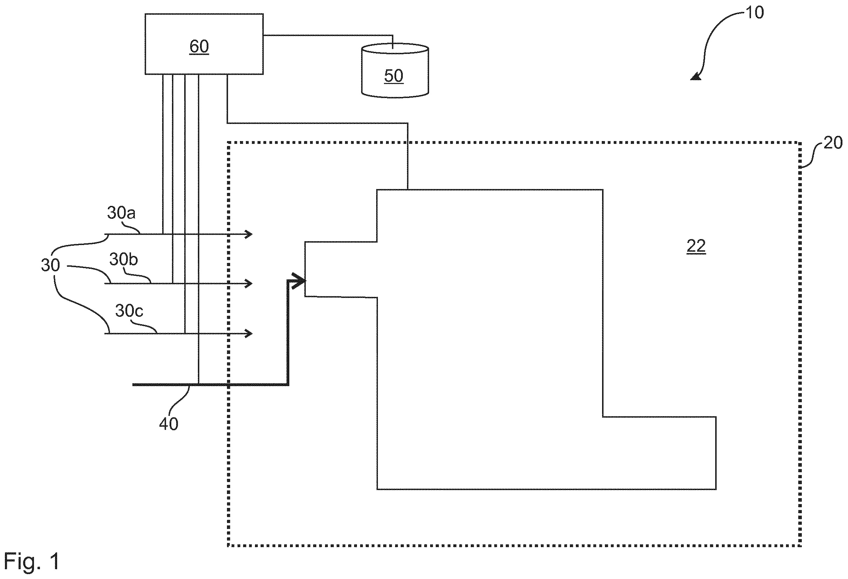

In Fig. 1 ist schematisch eine erfindungsgemäße Extrusionsanlage 10, insbesondere in Form einer Kunststoff-Extrusionsanlage, dargestellt. Sie befindet sich vollständig innerhalb einer Bilanzierungsgrenze 20, also in deren Bilanzraum 22, angeordnet. Über diese Bilanzierungsgrenze 20 hinweg in den Bilanzraum 22 hinein sind mit drei Pfeilen drei Energieströme 30 dargestellt. Diese drei Energieströme 30 teilen sich in einen Kühlwasserstrom 30a, einen Kühlluftstrom 30b, insbesondere in Form von Druckluft (in Norm m³) und die Zufuhr von elektrischem Strom 30c auf. Mit einem dicken Pfeil ist darüber hinaus der Zufuhrstrom 40 an Granulat für die Extrusionsanlage 10 dargestellt.

Darüber hinaus weist diese Extrusionsanlage 10 eine Kontrollvorrichtung 60 mit einer beigeordneten Datenbank 50 auf. Die Kontrollvorrichtung 60 überwacht die drei Energieströme 30 beim Eintreten in den Bilanzraum 22. Darüber hinaus wird über die Kontrollvorrichtung 60 der Zufuhrstrom 40 überwacht. In der Kontrollvorrichtung erfolgt die Bestimmung der Relation zwischen den Energieströmen 30 und dem Zufuhrstrom 40. Anhand einer oder mehrerer Kenngrößen kann nun eine Regelung bzw. ein Eingriff in die Steuerung der Extrusionsanlage 10 erfolgen.

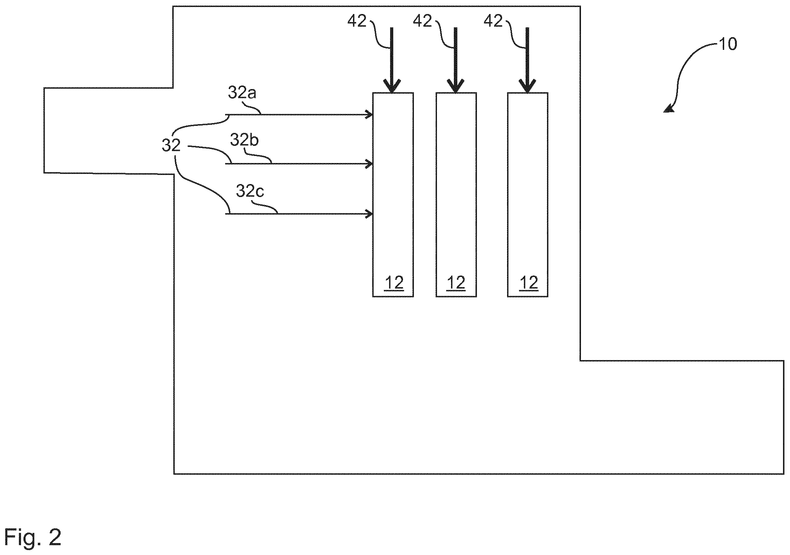

Die Fig. 2 zeigt eine Möglichkeit, die Auflösung bei der erfindungsgemäßen Überwachung noch weiter zu erhöhen. Diese Extrusionsanlage 10 ist im Wesentlichen identisch mit der Ausführungsform der Fig. 1. Jedoch ist hier gut zu erkennen, dass drei einzelne Extruder 12 vorgesehen sind. Der gesamte Zufuhrstrom 40 teilt sich dementsprechend auf einzelne Zufuhrströme 42 zu den einzelnen Extrudern 12 auf. Auch die gesamte Zufuhr an Energieströmen 30 teilt sich auf Energieströme 32 zu den jeweiligen Extrudern 12 auf. Somit kann ein Kühlwasserstrom 32a zum Extruder 12, ein Kühlluftstrom 32b zum Extruder 12 und eine Zufuhr von elektrischem Strom 32c zum Extruder 12 bestimmt werden. Die Überwachung erfolgt hier also Extruder-genau, so dass eine feinere Auflösung und eine optimierte Eingriffsmöglichkeit in die Steuerung bzw. Regelung der Extrusionsanlage möglich ist.
Die voranstehende Beschreibung der Ausführungsformen erläutert die vorliegende Erfindung ausschließlich im Rahmen von Beispielen.

### Bezugszeichenliste

- 10: Extrusionsanlage
- 12: Extruder
- 20: Bilanzierungsgrenze
- 22: Bilanzraum
- 30: Energiestrom
- 30a: Kühlwasser
- 30b: Kühlluft
- 30c: Strom
- 32: Energiestrom zu einem Extruder
- 32a: Kühlwasser zu einem Extruder
- 32b: Kühlluft zu einem Extruder
- 32c: Strom zu einem Extruder
- 40: Zufuhrstrom
- 42: Zufuhrstrom zu einem Extruder
- 50: Datenbank
- 60: Kontrollvorrichtung

## Patentansprüche

1. Überwachungsverfahren für die Überwachung des Energiebedarfs einer Extrusionsanlage (10), aufweisend die folgenden Schritte:
- Setzen einer Bilanzierungsgrenze (20), in deren Bilanzraum (22) sich die Extrusionsanlage (10) befindet,
- Überwachen zumindest eines Energiestroms (30) in den Bilanzraum (22) hinein,
- Überwachen eines Zufuhrstroms (40) an Granulat in die Extrusionsanlage (10),
- Bestimmen der Relation zwischen dem zumindest einen Energiestrom (30) und dem Zufuhrstrom (40),
wobei zumindest einer der folgenden Energieströme (30) überwacht wird:
- Kühlwasser (30a)
- Kühlluft (30b)
- Elektrischer Strom (30c),
wobei die bestimmte Relation zwischen dem zumindest einen Energiestrom (30) und dem Zufuhrstrom (40) mit Bezug auf die in der Extrusionsanlage (10) verwendete Rezeptur in einer Datenbank (50) gespeichert wird, wobei ein Vergleich der bestimmten Relation zwischen dem zumindest einen Energiestrom (30) und dem Zufuhrstrom (40) und einer gespeicherten Relation für die in der Extrusionsanlage (10) aktuell verwendete Rezeptur durchgeführt wird.

2. Überwachungsverfahren nach Anspruch 1,
**dadurch gekennzeichnet,**
**dass** die Kühlluft (30b) in Form von Druckluft überwacht wird.

3. Überwachungsverfahren nach Anspruch 1 oder 2,
**dadurch gekennzeichnet,**
**dass** wenigstens zwei Energieströme (30) in den Bilanzraum (22) hinein überwacht werden, wobei für die Bestimmung der Relation zu dem Zufuhrstrom (40) die Summe der überwachten Energieströme (30) verwendet wird.

4. Überwachungsverfahren nach einem der vorangegangenen Ansprüche,
**dadurch gekennzeichnet,**
**dass** zusätzlich die Überwachung zumindest eines Energiestroms (32) eines Extruders (12) der Extrusionsanlage (10) erfolgt, für welchen die Relation zum Zufuhrstrom (42) zu diesem Extruder (12) bestimmt wird.

5. Überwachungsverfahren nach einem der vorangegangenen Ansprüche,
**dadurch gekennzeichnet,**
**dass** zumindest zwei Energieströme (30) überwacht werden, wobei für jeden Energiestrom (30) einzeln die Relation zum Zufuhrstrom (40) bestimmt wird.

6. Überwachungsverfahren nach einem der vorangegangenen Ansprüche,
**dadurch gekennzeichnet,**
**dass** die Abwärme der Extrusionsanlage (10) über die Bestimmung der Relation der durchgeführten mechanischen Arbeit in der Extrusionsanlage (10) und des zumindest einen überwachten Energiestroms (30) überwacht wird.

7. Überwachungsverfahren nach einem der vorhergehenden Ansprüche,
**dadurch gekennzeichnet,**
**dass** eine Vielzahl von bestimmten Relationen zwischen dem zumindest einen Energiestrom (30) und dem Zufuhrstrom (40) in der Datenbank (50) gespeichert werden.

8. Extrusionsanlage (10), aufweisend zumindest einen Extruder (12) und wenigstens eine Kontrollvorrichtung (60),
**dadurch gekennzeichnet,**
**dass** die Kontrollvorrichtung (60) für die Ausführung eines Überwachungsverfahrens mit den Merkmalen eines der Ansprüche 1 bis 7 ausgebildet ist.

## Claims

1. A monitoring method for monitoring the energy requirement of an extrusion installation (10), having the following steps:
- setting a balancing limit (20), in the balance space (22) of which the extrusion installation (10) is located,
- monitoring at least one energy flow (30) into the balance space (22),
- monitoring a feed flow (40) of granules into the extrusion installation (10),
- determining the relationship between the at least one energy flow (30) and the feed flow (40),
wherein at least one of the following energy flows (30) is monitored:
- cooling water (30a)
- cooling air (30b)
- electric current (30c),
wherein the determined relationship between the at least one energy flow (30) and the feed flow (40) with respect to the formula used in the extrusion installation (10) is stored in a data base (50), wherein a comparison of the determined relationship between the at least one energy flow (30) and the feed flow (40) and a stored relationship for the formula currently used in the extrusion installation (10) is performed.

2. A monitoring method according to Claim 1,
**characterized in**
**that** the cooling air (30b) is monitored in the form of compressed air.

3. A monitoring method according to Claim 1 or 2,
**characterized in**
**that** at least two energy flows (30) into the balance space (22) are monitored, wherein the sum of the monitored energy flows (30) is used for the determination of the relationship to the feed flow (40).

4. A monitoring method according to any one of the preceding claims,
**characterized in**
**that** in addition the monitoring at least of one energy flow (32) of an extruder (12) of the extrusion installation (10) occurs, for which the relationship to the feed flow (42) to said extruder (12) is determined.

5. A monitoring method according to any one of the preceding claims,
**characterized in**
**that** at least two energy flows (30) are monitored, wherein for each energy flow (30) the relationship to the feed flow (40) is determined individually.

6. A monitoring method according to any one of the preceding claims,
**characterized in**
**that** the waste heat of the extrusion installation (10) is monitored by means of the determination of the relationship of the mechanical work carried out in the extrusion installation (10) and of the at least one monitored energy flow (30).

7. A monitoring method according to any one of the preceding claims,
**characterized in**
**that** a plurality of determined relationships between the at least one energy flow (30) and the feed flow (40) are stored in the data base (50).

8. An extrusion installation (10), having at least one extruder (12) and at least one control device (60),
**characterized in**
**that** the control device (60) is designed for performing a monitoring method with the features of any one of Claims 1 to 7.

## Revendications

1. Procédé de surveillance pour la surveillance du besoin en énergie d'une installation d'extrusion (10), comprenant les étapes suivantes :
- fixation d'une limite de bilan (20) dans l'espace de bilan (22) de laquelle se trouve l'installation d'extrusion (10),
- surveillance d'au moins un flux énergétique (30) dans l'espace de bilan (22),
- surveillance d'un débit d'alimentation (40) en granulés dans l'installation d'extrusion (10),
- détermination de la relation entre l'au moins un flux énergétique (30) et le débit d'alimentation (40),
au moins un des flux énergétiques (30) suivants étant surveillé :
- eau de refroidissement (30a)
- air de refroidissement (30b)
- courant électrique (30c),
la relation déterminée entre l'au moins un flux énergétique (30) et le débit d'alimentation (40) étant enregistrée dans une base de données (50) en référence à la recette utilisée dans l'installation d'extrusion (10), une comparaison de la relation déterminée entre l'au moins un flux énergétique (30) et le débit d'alimentation (40) et d'une relation enregistrée pour la recette actuellement utilisée dans l'installation d'extrusion (10) étant effectuée.

2. Procédé de surveillance selon la revendication 1,
**caractérisé en ce que**
l'air de refroidissement (30b) est surveillé sous la forme d'air comprimé.

3. Procédé de surveillance selon la revendication 1 ou 2,
**caractérisé en ce que**
au moins deux flux énergétiques (30) sont surveillés dans l'espace du bilan (22), la somme des flux énergétiques (30) surveillés étant utilisée pour la détermination de la relation avec le débit d'alimentation (40).

4. Procédé de surveillance selon l'une des revendications précédentes,
**caractérisé en ce que**
en outre, la surveillance d'au moins un flux énergétique (32) d'une extrudeuse (12) de l'installation d'extrusion (10) a lieu, pour laquelle la relation avec le débit d'alimentation (42) vers cette extrudeuse (12) est déterminée.

5. Procédé de surveillance selon l'une des revendications précédentes,
**caractérisé en ce que**
au moins deux flux énergétiques (30) sont surveillés, la relation avec le débit d'alimentation (40) étant déterminée individuellement pour chaque flux énergétique (30).

6. Procédé de surveillance selon l'une des revendications précédentes,
**caractérisé en ce que**
la chaleur dégagée de l'installation d'extrusion (10) est surveillée par l'intermédiaire de la détermination de la relation entre le travail mécanique effectué dans l'installation d'extrusion (10) et l'au moins un flux énergétique (30) surveillé.

7. Procédé de surveillance selon l'une des revendications précédentes,
**caractérisé en ce que**
une pluralité de relations déterminées entre l'au moins un flux énergétique (30) et le débit d'alimentation (40) sont enregistrées dans la base de données (50).

8. Installation d'extrusion (10), comprenant au moins une extrudeuse (12) et au moins un dispositif de contrôle (60),
**caractérisée en ce que**
le dispositif de contrôle (60) est conçu pour la réalisation d'un procédé de surveillance avec les caractéristiques d'une des revendications 1 à 7.
